# EUROPEAN PATENT APPLICATION

(11) **EP 2 387 159 A1**
(43) Date of publication of application: **16.11.2011**
(21) Application number: 11165730.0
(22) Date of filing: 11.05.2011
(51) Int. Cl.: H04B 1/18

(54) **Reconfigurable receiver architectures**

(30) Priority: 12.05.2010 US 333840 P
(71) Applicant: IMEC, 3001 Leuven (BE); Renesas Electronics Corporation, Kawasaki-shi, Kanagawa (JP)
(72) Inventor: Borremans, Jonathan, 2500 Lier (BE)
(74) Representative: Mackett, Margaret Dawn

(57) **Abstract**

Described herein is a adaptive front-end receiver architecture (200) that is configurable to operate in a first mode where an incoming signal is amplified before being down-converted and in a second mode where the incoming signal is down-converted without amplification. The architecture (200) comprises a low-noise amplifier (210) having an input (215) to which an input signal (220) is applied for processing and a mixer arrangement (250) connected in series with the low-noise amplifier (210), the mixer arrangement (250) including a local oscillator (LO2) that down-converts output signals from the low-noise amplifier (210). A further mixer arrangement (240), including a further local oscillator (LO1), is provided that bypasses the low-noise amplifier (210), the further local oscillator (LO1) directly down-converting the input signal (220). In each mode of operation, the down-converted signal is filtered using a baseband impedance component (230) to provide an output signal (260) for further processing.

## Description

The present invention relates to reconfigurable receiver architectures, and is more particularly, concerned with a reconfigurable receiver front-end for use with multi-standard and software-defined radios requiring high sensitivity, particularly in the presence of large out-of-band interferers.

The requirements of next-generation wireless terminals are driving radio frequency integrated circuit (RFIC) design towards ubiquitous multi-standard connectivity at reduced power consumption and cost. While the use of scaled CMOS technology is required to allow economically feasible single-chip integration with a digital processor, a software-defined radio (SDR) is the preferred approach to provide a reconfigurable platform that covers a broad range of noise and/or linearity specifications while offering the best power and/or performance radio trade-off. The SDR must combine the most demanding requirements, such as, high sensitivities for cellular standards, low phase noise and high linearity in order to be competitive with dedicated single-mode radios.

To relax the filtering requirements of such multi-standard radios, aiming to simplify the antenna interface of these systems, the RF front-end should be able to cope with large interferences due to the presence of other transmitters. These interferences occur at frequencies other than at the frequency of the wanted signal, and are said to be out-of-band. They are also referred to as blockers. Such out-of-band blockers can be as high as 0dBm, especially when the interfering transmitter is less than 1 m away from the receiving radio.

Receiver architectures are known which comprise a low-noise amplifier (LNA) coupled to a mixer. Input signals are applied to the LNA where it is amplified and passed to the mixer to provide an output signal. A switched LNA bypass is provided enables the LNA to be bypassed in the case where the input signals are large.

However, whilst this appears to provide a solution to enable the receiver architecture to handle both small and large input signals, this solution suffers from some disadvantages. The first disadvantage is that the bypass switch is not very linear and contributes to distortion of the signal. In addition, input matching is not achieved as the LNA, which takes care of input matching, needs to be turned off when large input signals are received. In this case, some other means of input matching needs to be provided. Moreover, whilst large signals can be present at the input, no filtering is provided at the RF input of the system, and, as such, when the signals are too large, the input power due to unwanted interference will compress the system, even when the bypass mode is activated.

US-A-2003/0159156 discloses a high linearity, low noise figure tuner front end circuit for television signals comprising first and second radio frequency paths arranged between a radio frequency input and a radio frequency output which can be selectively connected. The first path includes a mixer and the second path includes a low noise amplifier followed by a mixer.

It is an object of the present invention to provide a reconfigurable receiver architecture that overcomes the problems associated with known receiver front-end architectures employing LNA bypass arrangements.

In accordance with a first aspect of the present invention, there is provided an adaptive front-end architecture for a receiver comprising: an input for receiving an input signal; a linear low-noise amplifier connectable to the input for amplifying the input signal and for providing an amplified output signal; a first passive mixer arrangement connected to the amplified output signal, the first passive mixer arrangement including a first local oscillator whose signal is mixed with the amplified output signal to provide a baseband output signal; and a bypass arrangement connectable to the input for bypassing the linear low-noise amplifier; the bypass arrangement comprising a second passive mixer arrangement that includes a second local oscillator whose signal is mixed with the input signal to provide the baseband output signal; characterised in that the adaptive front-end architecture further comprises a baseband impedance component for filtering the baseband output signal using impedance translation.

By using a passive mixer arrangement in the bypass path, the problems associated with non-linearity of switches are overcome. In addition, the passive mixer arrangement is transparent in terms of impedance and assists with filtering of the signals.

The first and second passive mixer arrangements each further includes selection means for connecting and disconnecting respective ones of the first and second local oscillators.

In accordance with another aspect of the present invention, there is provided a method of adaptively down-converting an input signal to provide a down-converted output signal, the method comprising the steps of: a) receiving the input signal; b) amplifying the received input signal to provide an amplified signal; c) down-converting the amplified signal to provide the down-converted output signal; d) bypassing steps b) and c); and e) down-converting the input signal; characterised in that the method further comprises the step of filtering the down-converted signal using impedance translation to provide the down-converted output signal.

It will be appreciated that steps b) and c) can be bypassed when large input signals are present or when amplification of the input signals is not needed to save power.

Step c) comprises using a first passive mixer arrangement including a first local oscillator whose signal is mixed with the amplified signal to provide the down-converted signal.

Step e) comprises using a second passive mixer arrangement including a second local oscillator whose signal is mixed with the input signal to provide the down-converted signal.

In addition, step e) further comprises deselecting the first local oscillator to use the second local oscillator. Similarly, step b) comprises deselecting the second local oscillator to use the first local oscillator signal in step c).

The present invention comprises an adaptive radio front-end arranged for operating in a first and a second operating mode. The front-end comprises an input terminal arranged for receiving an input signal, a linear low-noise amplifier (LNA) connected to the input terminal, a baseband impedance component characterised by a baseband filtering profile of the impedance arranged for filtering the appropriate signal (the appropriate signal may be either the input signal or either the amplified input signal) and shared by the output of a first and a second mixing means, a first mixing means connected (in series) to the input terminal of the front-end and the baseband impedance component, a second mixing means connected (in series) to the linear LNA output and the baseband impedance component. The first and the second mixing means comprises switches.

The linear low-noise amplifier is arranged for providing input matching. The linear LNA is further arranged for providing linear amplification of the input signal in the second operating mode. The LNA is designed with high output impedance. As such, the LNA can be seen as an amplifier that amplifies the input voltage, V_{IN}, into an output current, I_{OUT}, where I_{OUT} = A*V_{IN}. The output current flows into the output impedance, Z_{OUT}, seen by the LNA and therefore provides the conversion into voltage. The gain, G, is then G = V_{OUT}/V_{IN} = I_{OUT}*Z_{OUT}/V_{IN} = A. Here, Z_{OUT} is determined by the element loading the LNA. In this case, the loading element consists of a mixer loaded with a filtering component. Through the frequency-transparency of the mixer, the baseband filtering of the mixer load is up-converted to the RF input of the mixer, and becomes a bandpass filter. The LNA is thus loaded by a bandpass impedance, Z_{OUT}, and hence the LNA gain (G = l_{OUT}*Z_{OUT}/V_{IN}) is also bandpass, or frequency selective.

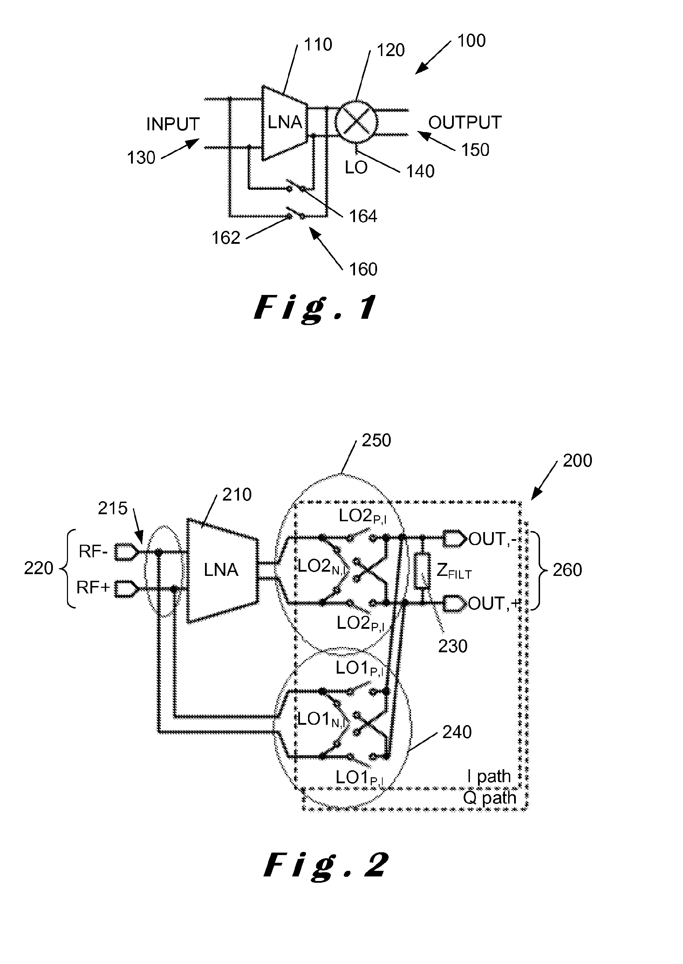

In the first operating mode, the first mixing means is arranged for sampling the input signal to the baseband impedance component, by means of a first oscillating input frequency. Further, the first mixing means provides an input impedance consisting of the baseband impedance, up-converted to the first oscillating input frequency by means of impedance translation. As such, the baseband steep filtering profile is up-converted to the mixer input for providing out-of-band signal filtering at the input terminal of the front-end. The filter centre frequency is thus determined by the oscillating input frequency of the mixer means (first oscillating input frequency). Such steep out-of-band filtering at the RF input cannot be achieved by other on-chip techniques known in the art. For example, passive filtering needs high-Q elements, unavailable on-chip and not tuneable, and active filtering is noisy, nonlinear and frequency-limited. The first operating mode can be used in the presence of large input signals when no LNA gain is desired. This provides linear behaviour and power savings. Strong out-of-band interferers will consequently be filtered at the input of the front-end, which prevents compression and distortion of subsequent blocks. This operation provides an improvement over the prior art in the form of an LNA bypass switch as described with reference to Figure 1 below, since the latter forms a nonlinear switch, added to the chain. In the current embodiment, the switch itself is the mixer, and its linearity is of no concern.

In the second operating mode, where the input signal is very weak, the second mixing means is arranged for down-converting the amplified LNA output signal to the (same) baseband impedance component, by means of a second oscillating input. Note that, here, the LNA can be seen as an amplifier that amplifies the input voltage into an output current. The output current flows into the output impedance seen by the LNA, and therefore provides the conversion from current to voltage. The second mixing means provides an input impedance consisting of the baseband impedance, up-converted to the oscillating input, by means of impedance translation, for providing out-of-band signal filtering at the output of the LNA. Out-of-band blockers are hence filtered at the LNA output before they are amplified in the voltage domain. As a result, the presence of out-of-band blockers does not cause compression of the signals. The second mode is used at very weak desired input power, and for providing low noise amplification, without resulting in compression of the signal before it reaches the second mixing means, at the LNA output. The oscillating input to either one of the mixing means determines the frequency band of operation, where each of the mixing means can be disabled by disabling its oscillating input, or opening the switches of the other mixing means.

In either mode of operation, the LNA can be left on, and used for input matching purposes, since the LNA output can be isolated from the front-end output by opening the second mixer switches. In the mixer-first mode, that is, where the LNA is bypassed, the LNA can be reconfigured to provide low gain through good input matching. Therefore, power savings can be achieved. As another example, part of the input matching can be achieved by the mixer connected to the input. In this case, the LNA can then provide the remainder necessary for input matching at lower input powers.

In an embodiment, the baseband impedance component (Z_{FILT}) comprises a capacitor, thereby achieving a low-pass filter at baseband, and accordingly achieving a bandpass filter at the high-frequency input of each mixing means, filtering around the oscillating input frequency,.

In another embodiment, the baseband impedance component comprises a low impedance, resistive component, thereby achieving a low impedance at baseband, and a low impedance at the high-frequency input of each mixing means, for low voltage swing, and little compression in the case of strong interferers.

In an embodiment, the baseband impedance component comprises any other active of passive impedance or combination thereof.

In an additional embodiment, the present invention also relates to a method for receiving an (RF) input signal by an adaptive receiver front-end (method for adaptively down-converting an RF signal by a receiver front-end). The method comprises at least two operating modes; a first operating mode comprising the steps of receiving an input signal, amplifying the received signal by means of a LNA, down-converting the amplified signal by means of a sampling mixer means (having a first input oscillating frequency) to a baseband frequency; and a second operating mode comprising the steps of down-converting the received signal by means of sampling mixer means (having a first input oscillating frequency) to a baseband frequency. The method further comprises the step of selecting the operating mode by enabling or disabling the oscillating input of each of the mixing means. The oscillating input to either one of the mixing means determines the frequency band of operation, where each of the mixing means can be disabled by disabling its oscillating input, or thus opening the switches of the other mixing means.

For a better understanding of the present invention, reference will now be made, by way of example only, to the accompanying drawings in which:-
Figure 1 illustrates a prior art receiver front end;
Figure 2 illustrates a receiver front-end in accordance with the present invention;
Figure 3 illustrates impedance translational properties of sampling mixers;
Figure 4 illustrates the receiver front-end of Figure 2 operating as a low noise amplifier in accordance with the present invention; and
Figure 5 illustrates the receiver front-end of Figure 2 operating as a mixer in accordance with the present invention.

The present invention will be described with respect to particular embodiments and with reference to certain drawings but the invention is not limited thereto but. The drawings described are only schematic and are non-limiting. In the drawings, the size of some of the elements may be exaggerated and not drawn on scale for illustrative purposes.

In Figure 1, a state-of-the-art receiver architecture 100 is shown. The architecture 100 comprises a low-noise amplifier (LNA) 110 coupled to a mixer 120. An input signal 130 is applied to the LNA 110, where it is amplified and passed to the mixer 120 where it is mixed with a local oscillator (LO) signal 140 to provide an output signal 150. A LNA bypass 160 is provided which is coupled to the input 130 and to the input of the mixer 120. As shown, the LNA bypass 160 comprises switch elements 162, 164 which when closed effectively enables the input signal 130 to bypass the LNA 110.

The architecture 100 is able to handle either large or small input signals. In case of small input signals, the switches 162, 164 in the LNA bypass 160 are open so that the input signal 130 does not bypass the LNA 110. The LNA 110 amplifies the input signal 130 and the amplified signal is passed to the mixer 120. In the mixer 120, the amplified signal is down-converted, using the LO signal 140, to provide a low frequency output signal 150. At low frequencies, a baseband section (not shown) filters the output signal 150.

In case of large input signals, for example, greater than 0dBm, switches 162, 164 of the LNA bypass 160 are closed and the LNA 110 is bypassed. This means that the input signal 130 is applied to the mixer 120 without gain, and the system can better handle large signals.

As discussed above, the architecture 100, when receiving large input signals, suffers from the following disadvantages: the bypass switch is not very linear and contributes to distortion of the signal; input matching is not achieved as the LNA, which takes care of input matching, needs to be turned off when large input signals are received; and no filtering is provided at the RF input of the system, the input power due to unwanted interference tends to compress the system, even when the bypass mode is activated.

In accordance with the present invention, an improved adaptive receiver front-end architecture 200 is provided as shown in Figure 2. In Figure 2, the architecture 200 comprises a linear LNA 210 having input terminals 215 to which input signals 220 are applied, a baseband impedance component 230, a first mixer arrangement 240 connected in series with the input terminals 215 and a second mixer arrangement 250 connected in series with the LNA 210. The first mixer arrangement 240 utilises a first LO signal LO1 and the second mixer arrangement 250 utilises a second LO signal LO2 as shown. Each of the first and second mixer arrangements 240, 250 is also connected in series with the baseband impedance component 230. An output 260 is also provided as shown.

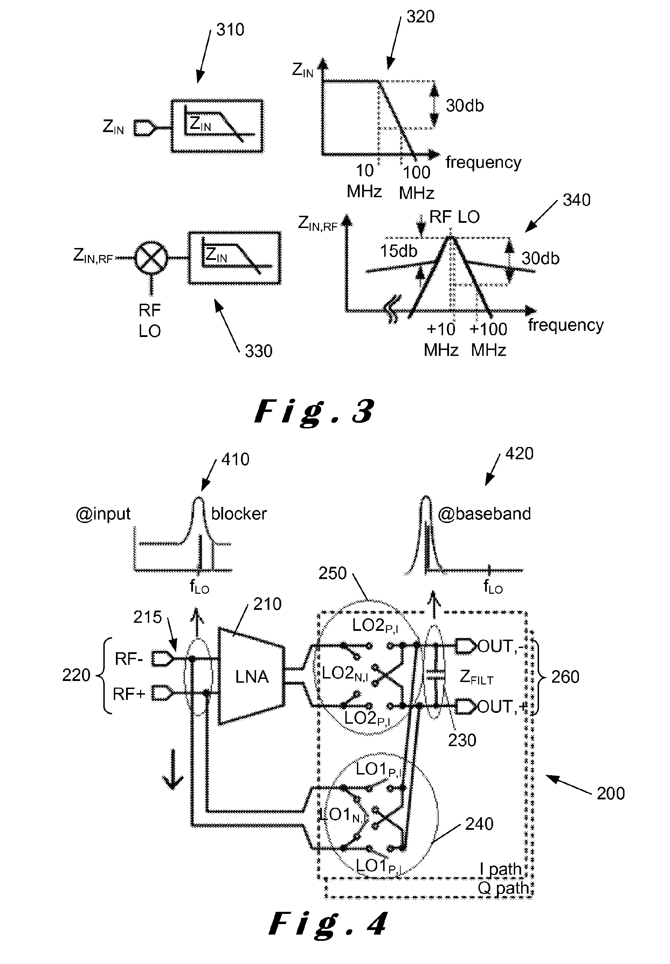

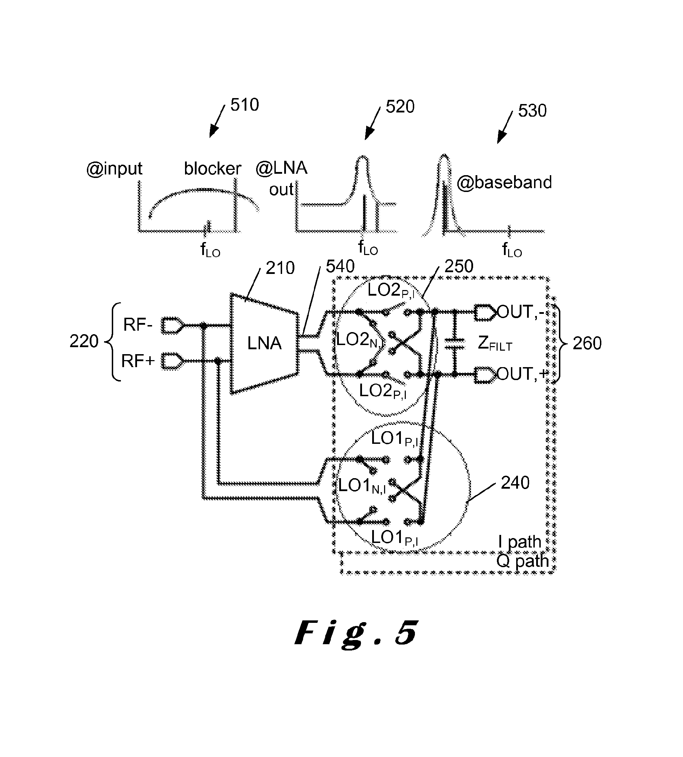

Each of the first and second mixer arrangements 240, 250 has LO inputs and switches for switching between two modes of operation, namely, a LNA and a mixer. It is possible to switch between two modes of operation by turning the individual mixer arrangements 240, 250 on or off by disabling the respective LO inputs, LO1 and LO2, and opening the respective switches. These modes of operation will be described in more detail with respect to Figures 4 and 5 below.

It will be appreciated that the first and second mixing arrangements 240, 250 are shown as being in the I path but it will readily be appreciated that they are also connected to the Q path for baseband output signals. Only the output signal 260 from the I path is shown in Figure 2 for clarity.

Figure 3 illustrates impedance translational properties of sampling mixers which are used to provide filtering in both operational modes of the receiver front-end architecture in accordance with the present invention. For a baseband filtering profile, Z_{IN}, as shown by 310, no filtering properties are obtained as shown by 320. When Z_{IN} is up-converted to a RF input frequency using a RF LO input to a sampling mixer as shown in 330 using impedance translation, filtering is provided as shown in 340. This is possible because the first mixer arrangement 240 in Figure 2 is passive, and therefore transparent in terms of impedance.

In accordance with the present invention, impedance translational properties of sampling mixers can be used in both modes of operation, namely, as a LNA and a mixer, of the front end architecture 200 shown in Figure 2. This pre-attenuates the input out-of-band interference signal. Overall, a much better linearity can be achieved. Finally, the linearity of the mixer is very high, as it is now not influenced by the linearity of a bypass switch or LNA. Therefore, the front-end architecture 200 has the advantages that: it provides a much better immunity to blockers or interference signals; it provides RF filtering; it can bypass the LNA; and it is much more linear.

This means that a front-end receiver architecture can be provided that features a highly linear LNA for low noise amplification and a down-converter that can reconfigure to a mixer-first architecture. This is done in an elegant manner that allows for very highly linear operation, mainly to cope with strong, out-of-band unwanted interferences within the two modes of operation, namely, a LNA-first mode and mixer-first mode, where switching between the two modes is achieved by turning the mixers on or off. This is achieved by disabling the local oscillator input to the mixers and opening the mixer switches as described above with reference to Figure 2.

Figure 4 is similar to Figure 2 and illustrates one mode of operation of the front-end architecture in accordance with the present invention. Components that have previously been described in relation to Figure 2 bear the same reference numerals. The first passive mixer arrangement 240 connects directly to the input 215, that is, is directly coupled to the antenna (not shown) to receive the input signals 220. The output of the first mixer arrangement 240 connects its output to the baseband impedance component 230'. In this case, the baseband impedance component 230' is shown as a capacitor. In case the LNA-first operation is not desired, because of a very large interference at the input 215 as shown at 410, the second mixer arrangement 250 is disabled with its switches open and there is no mixing with the second LO signal LO2. The first mixer arrangement 240 is now enabled, and directly down-converts the input signal 220 to baseband as shown by the graph 420. Now, the LNA 210 is not involved in this signal path and there is no output from the LNA 210 at 430. The signal path is indicated by arrow 270. Here, bypass switches that can affect the linearity are not needed. In fact, the bypass switches form part of the first mixer arrangement 240, and these bypass switches also bypass the second mixer arrangement 250. This has the advantage that the LNA 210 can still be left in place to guarantee input matching.

The filtering profiles are now described with reference to Figure 4. In Figure 4, the second mixer arrangement 250 at the LNA output 430 is disabled (LO2 is arranged such that the switches are open), and the first mixer arrangement 240 is enabled (LO1 is provided with appropriate oscillating signal). The baseband filter profile, in this embodiment achieved by means of a capacitor 230', is up-converted to the input, providing the filter profiles as indicated as 410, 420. Profile 410 illustrates the profile at the input 215 and profile 420 illustrates the profile at the baseband impedance component 230'. Out-of-band filtering is provided at the front-end input 215. An unwanted blocker or interference signal is directly filtered at the input, preventing it from compressing the system. This mode of operation is to be used at large input power where no LNA gain is desired, achieves power consumption savings and can handle out-of-band interference signals greater than 0dBm.

The other mode of operation, LNA operation, is shown in Figure 5. Figure 5 is similar to Figure 2 and components that have previously been described in relation to Figure 2 bear the same reference numerals. In Figure 5, the first mixer arrangement 240 is disabled (LO1 is arranged such that the switches are open), while the second mixer arrangement 250 is enabled (LO2 is provided with an appropriate oscillating signal). No filtering is present at the input 215, other than provided by the LNA 210. The profile of the signal received at the input 220 is shown at 510. The LNA 210 provides a low noise amplification signal 540 to the second mixer arrangement 250. The low noise amplification signal 520 provides an up-converted filter profile as shown by 520 at the LNA output 540, filtering the unwanted blocker or interference signal as shown at 510. As such, the output of the LNA 210 will only compress at very much higher blocker power.

This second mode of operation is to be used in the presence of weak input power and can still filter out-of-band interference signals, and to provide low noise amplification and down-conversion. This mode of operation can handle out-of-band interference signals greater than 0dBm since the LNA output is prevented from compressing, while provide a low noise figure (NF).

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

## Claims

1. An adaptive front-end architecture (200) for a receiver comprising:
an input (215) for receiving an input signal (220);
a linear low-noise amplifier (210) connectable to the input (215) for amplifying the input signal (220) and for providing an amplified output signal (540);
a first passive mixer arrangement (250) connected to the amplified output signal (540), the first passive mixer arrangement (250) including a first local oscillator (LO2) whose signal is mixed with the amplified output signal (540) to provide a baseband output signal (260); and
a bypass arrangement (240) connectable to the input (215) for bypassing the linear low-noise amplifier (210), the bypass arrangement comprising a second passive mixer arrangement (240) that includes a second local oscillator (LO1) whose signal is mixed with the input signal (220) to provide the baseband output signal (260);
**characterised in that** the adaptive front-end architecture (200) further comprises a baseband impedance component (230; 230') for filtering the baseband output signal (260) using impedance translation.

2. An adaptive front-end architecture according to claim 1, wherein the first and second passive mixer arrangements (240, 250) each further includes selection means for connecting and disconnecting respective ones of the first and second local oscillators (LO1, LO2).

3. A method of adaptively down-converting an input signal (220) to provide a down-converted output signal (260), the method comprising the steps of:
a) receiving the input signal (220);
b) amplifying the received input signal (220) to provide an amplified signal (540);
c) down-converting the amplified signal (540);
d) bypassing steps b) and c); and
e) down-converting the input signal (220); **characterised in that** the method further comprises the step of filtering the down-converted signal using impedance translation to provide a down-converted output signal (260).

4. A method of adaptively down-converting an input signal according to claim 3, wherein step c) comprises using a first passive mixer arrangement (250) including a first local oscillator (LO2) whose signal is mixed with the amplified signal (540) to provide the down-converted signal.

5. A method of adaptively down-converting an input signal according to claim 3 or 4, wherein step e) comprises using a second passive mixer arrangement (240) including a second local oscillator signal (LO1) whose signal is mixed with the input signal (220) to provide the down-converted signal.

6. A method of adaptively down-converting an input signal according to claim 5, wherein step e) further comprises deselecting the first local oscillator (LO2) to use the second local oscillator (LO1).

7. A method of adaptively down-converting an input signal according to claim 5, wherein step b) comprises deselecting the second local oscillator (LO1) to use the first local oscillator (LO2) in step c).
